(19) Europäisches Patentamt
European Patent Office
Office européen des brevets

(11) EP 4 592 092 A1

(12) **EUROPEAN PATENT APPLICATION**

(43) Date of publication:
30.07.2025 Bulletin 2025/31

(21) Application number: 25151038.4

(22) Date of filing: 09.01.2025

(51) International Patent Classification (IPC):
*B60C 3/04* (2006.01)   *B60C 15/04* (2006.01)
*B60C 15/06* (2006.01)

(52) Cooperative Patent Classification (CPC):
**B60C 15/04; B60C 3/04;** B60C 2015/046;
B60C 2015/048; B60C 2015/0614

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 22.01.2024 JP 2024007573

(71) Applicant: **Sumitomo Rubber Industries, Ltd.
Kobe-shi, Hyogo 651-0072 (JP)**

(72) Inventors:
• **KATO, Hiroaki
  Kobe-shi, 651-0072 (JP)**
• **ISHIGAKI, Yuichi
  Kobe-shi, 651-0072 (JP)**

(74) Representative: **Manitz Finsterwald
Patent- und Rechtsanwaltspartnerschaft mbB
Martin-Greif-Straße 1
80336 München (DE)**

(54) **PNEUMATIC TIRE**

(57)     Provided is a pneumatic tire having a specific tire size and having an enhanced rim-mounting workability. The present invention is directed to a pneumatic tire to be mounted on a rim R and used. The rim R has a rim diameter RD of 10 to 18 inches. A ratio SH/SW of a cross-sectional height SH of the tire to a cross-sectional width SW of the tire is 0.30 to 0.45. A ratio RW/SW of a rim width RW of the rim R to the cross-sectional width SW of the tire is 0.78 to 0.99. The pneumatic tire includes a pair of bead portions 4 in which respective bead cores 5 are embedded. A cross-sectional width Wb (mm) in a tire axial direction of at least one of the bead cores 5 satisfies expression (1) described below.

$$Wb \leq 21 \times (SH/SW) \cdots (1)$$

Fig.1

EP 4 592 092 A1

**Description**

BACKGROUND OF THE INVENTION

Field of the Invention

The present invention relates to a pneumatic tire.

Background Art

In recent years, small-sized shuttle buses intended for transporting people and objects in urban areas have been proposed (see, for example, Japanese Laid-Open Patent Publication No. 2021-075088). Each of such small-sized shuttle buses is required to ensure a large vehicle interior space. In-wheel motors are sometimes employed for the small-sized shuttle bus.

In Japanese Laid-Open Patent Publication No. 2023-102627, a pneumatic tire to be used for the small-sized shuttle bus is proposed. For the tire, a rim diameter, a ratio between a tire cross-sectional height and a tire cross-sectional width, and a ratio between a rim width of a rim and the tire cross-sectional width are defined in order to ensure the vehicle interior space and a wide rim space that can accommodate the corresponding in-wheel motor.

The above tire has a problem in that workability at the time of mounting the tire on a rim (hereinafter, referred to as "rim-mounting workability") is poor.

The present invention has been made in view of the above problems, and a main object of the present invention is to provide a pneumatic tire having a specific tire size and having an enhanced rim-mounting workability.

SUMMARY OF THE INVENTION

The present invention is directed to a pneumatic tire to be mounted on a rim and used, the rim having a rim diameter RD of 10 to 18 inches, a ratio SH/SW of a cross-sectional height SH of the tire to a cross-sectional width SW of the tire being 0.30 to 0.45, a ratio RW/SW of a rim width RW of the rim to the cross-sectional width SW of the tire being 0.78 to 0.99, the pneumatic tire comprising a pair of bead portions in which respective bead cores are embedded, wherein a cross-sectional width Wb (mm) in a tire axial direction of at least one of the bead cores satisfies expression (1) described below,

$$\text{Wb} \leq 21 \times (\text{SH/SW}) \cdots (1).$$

The pneumatic tire according to the present invention allows enhancement of the rim-mounting workability thereof owing to employment of the above configuration.

BRIEF DESCRIPTION OF THE DRAWINGS

FIG. 1 is a transverse cross-sectional view of a pneumatic tire according to an embodiment of the present invention;
FIG. 2 is a perspective view of a vehicle mounted with tires each of which is the tire according to the present invention;
FIG. 3 is an enlarged cross-sectional view of a bead portion in FIG. 1; and
FIG. 4 is an enlarged cross-sectional view of a bead core in FIG. 3.

DETAILED DESCRIPTION

Hereinafter, an embodiment of the present invention will be described with reference to the drawings. The drawings are depicted so as to include the features of the present invention, but may contain exaggerated expressions and expressions that differ from the dimensional ratio of the actual structure in order to help the understanding of the present invention. In addition, the same or common elements are denoted by the same reference characters throughout each embodiment, and the redundant description thereof is omitted. A known configuration can be employed as appropriate, as a configuration that is not described in the present description.

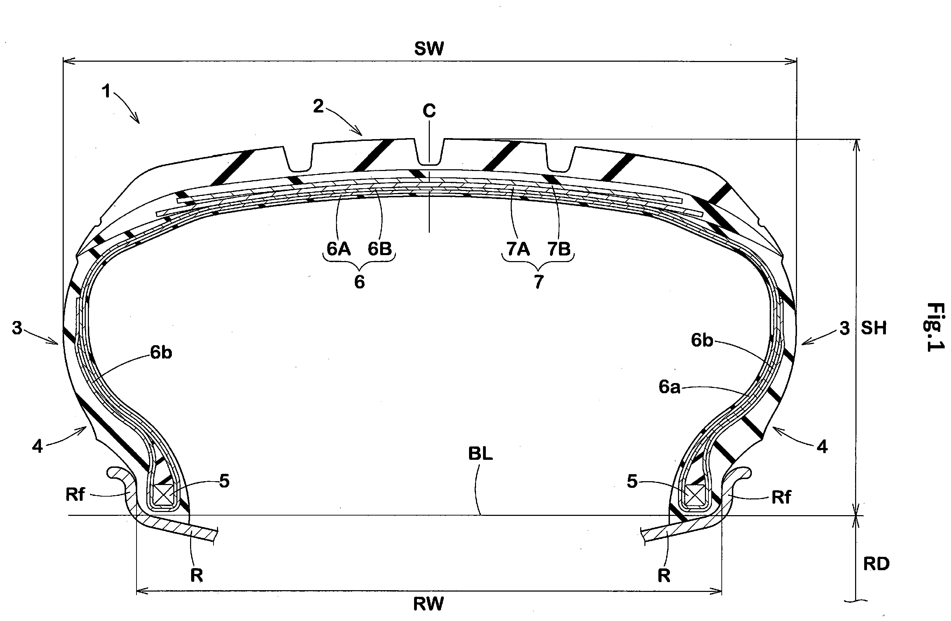

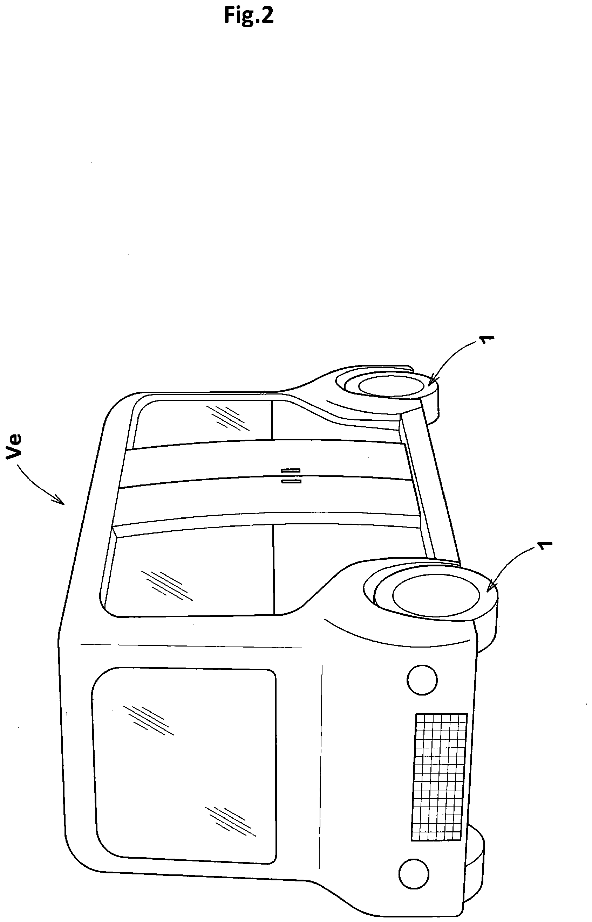

FIG. 1 is a transverse cross-sectional view of a pneumatic tire 1 (hereinafter, sometimes simply referred to as "tire 1") according to an embodiment of the present invention. FIG. 2 is a perspective view schematically showing a vehicle Ve mounted with tires each of which is the tire 1 according to the present invention. As shown in FIG. 1 and FIG. 2, the tire 1 according to the present embodiment is to be mounted on a rim R and used, and is suitably used as, for example, a pneumatic tire for the vehicle Ve such as a small-sized bus (specifically, a small-sized shuttle bus).

As shown in FIG. 2, the above vehicle Ve is a four-wheeled automobile. The vehicle Ve is not limited to a four-wheeled vehicle and may have a six-wheeled configuration or an eight-wheeled configuration. The vehicle Ve is mounted with a predetermined number of the tires 1 according to the wheel configuration.

The vehicle Ve is classified as a small-sized shuttle bus to be used for transporting people, objects, and the like in a city, for example. The small-sized shuttle bus is assumed to be a vehicle having an entire length of 4 m to 7 m, an entire width of about 2 m, and a total vehicle weight of about 3 t. However, the tire 1 according to the present invention is used not only for vehicles within the above range but also for various vehicles.

Also, the purpose of the vehicle Ve is not necessarily limited to transportation of people, and may be transportation of objects, a mobile store, a mobile office, or the like. The vehicle Ve is desirably an electric automobile having an automated driving function, for example. In addition, the vehicle Ve is assumed to have a range of comparatively low running speeds (with the average speed being about 50 km/h) since focus is mainly placed on transportation of people, objects, or the like in a city. However, the mode of the vehicle Ve is not limited to such a mode.

In a case where the vehicle Ve is an electric automobile, motors are desirably disposed in rims thereof. In addition, in this case, the vehicle Ve preferably has an independent steering function of allowing independent steering of each of the wheels. Consequently, turning or the like is easily performed with the place being fixed, and the vehicle interior space of the vehicle Ve can be made large.

The tire 1 according to the present embodiment to be used for such a vehicle Ve is required to have a high space efficiency. Thus, a small rim diameter and a low tire cross-sectional height are required for the tire 1.

FIG. 1 is a transverse cross-sectional view, including a rotation axis, of the tire 1 in a standardized state. In the case of a pneumatic tire for which various standards are defined, the "standardized state" is a state where: the tire is mounted on a standardized rim and inflated to a standardized internal pressure; and no load is applied to the tire. In the case of a tire for which various standards are not defined, the standardized state means a standard use state, corresponding to the purpose of use of the tire, where: the tire has not been mounted to a vehicle; and no load is applied to the tire. In the present description, dimensions and the like of constituents of the tire are values measured in the standardized state, unless otherwise specified. Meanwhile, dimensions of constituents (e.g., an internal member of the tire) that cannot be measured in the standardized state are values measured in a state, of the tire, having been made as similar to the standardized state as possible.

The "standardized rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The tire 1 includes a tread portion 2, a pair of sidewall portions 3, and a pair of bead portions 4. Each of the sidewall portions 3 is contiguous with the corresponding outer side in a tire axial direction of the tread portion 2 and extends in a tire radial direction. Each of the bead portions 4 is contiguous with the inner side in the tire radial direction of the corresponding sidewall portion 3. In addition, in the bead portion 4, a bead core 5 for fixing the bead portion 4 to the rim R is embedded.

In addition, the tire 1 includes a carcass 6. The carcass 6 extends between the pair of bead portions 4. In other words, the carcass 6 extends from the bead portion 4 on one side through the sidewall portion 3 on the one side, the tread portion 2, and the sidewall portion 3 on the other side to the bead portion 4 on the other side.

The carcass 6 is composed of, for example, two carcass plies 6A and 6B. Each of the carcass plies includes, for example, a body portion 6a and turned-up portions 6b. The body portion 6a extends between the pair of bead portions 4, for example. Each of the turned-up portions 6b is contiguous with the body portion 6a and turned up around the corresponding bead core 5 from the inner side to the outer side in the tire axial direction, for example.

Each of the carcass plies 6A and 6B includes a plurality of carcass cords (not shown) and a topping rubber (not shown) coating the carcass cords. As each of the carcass cords, an organic fiber cord formed from aramid, rayon, or the like is used, for example. The carcass cords are desirably arrayed at an angle of 70 to 90° relative to a tire equator C, for example. However, the form of the tire 1 according to the present invention is not limited to such a form.

In the tread portion 2 in the present embodiment, a belt layer 7 is disposed. The belt layer 7 is composed of, for example, a first belt ply 7A and a second belt ply 7B. Each of the belt plies includes, for example, a plurality of belt cords arrayed at an angle of 15 to 45° relative to a tire circumferential direction. The belt cords included in the first belt ply 7A and the belt cords included in the second belt ply 7B are tilted in mutually opposite directions relative to the tire circumferential direction. Consequently, the tread portion 2 is effectively reinforced.

In the present invention, the rim R has a rim diameter RD of 10 to 18 inches. A ratio SH/SW of a cross-sectional height SH of the tire 1 to a cross-sectional width SW of the tire 1 is 0.30 to 0.45. A ratio RW/SW of a rim width RW of the rim R to the cross-sectional width SW of the tire 1 is 0.78 to 0.99. The cross-sectional width SW is, for example, 150 to 250 mm. A tire size is assumed to be, for example, 205/40R15, 205/30R15, 215/40R15, 225/40R15, or the like. However, the tire size in the present invention is not limited to such tire sizes.

The rim diameter RD is the outer diameter of a rim body portion fitted by the bead core 5 of each of the bead portions 4. In a case where a side wall of the tire 1 has protrusions (not shown) representing patterns or characters, the cross-sectional width SW of the tire 1 corresponds to a width obtained by excluding the protrusions. The cross-sectional height SH of the tire 1 corresponds to 1/2 of the difference between the outer diameter of the tire and the rim diameter RD. In other words, the cross-sectional height SH corresponds to the distance in the tire radial direction from a bead baseline BL to the outer end in the tire radial direction of the tire 1. The bead baseline BL means a tire axial direction line passing through a position corresponding to the rim diameter.

The rim width RW of the rim R corresponds to the distance in the tire axial direction from the inner surface of one of rim flanges Rf to the inner surface of the other rim flange Rf. In a case where the inner surfaces are tilted, said distance is measured at the center positions in the tire radial direction of the bead cores 5 when the tire 1 is mounted on the rim R.

As described above, the tire 1 according to the present invention has a comparatively small rim diameter RD and a comparatively low cross-sectional height SH, and has a comparatively large rim width RW in proportion to the cross-sectional width SW of the tire. Such a tire 1 makes it possible to, for example, increase the space efficiency in the vehicle space when being mounted to the above vehicle Ve (shown in FIG. 2) and sufficiently ensure, in a vehicle in which a motor is disposed in each rim, an accommodation space for the motor. In addition, such a tire 1 can maintain a sufficient air volume for bearing the total vehicle weight. However, the rim-mounting workability of such a tire 1 tends to be poor owing to the shape thereof.

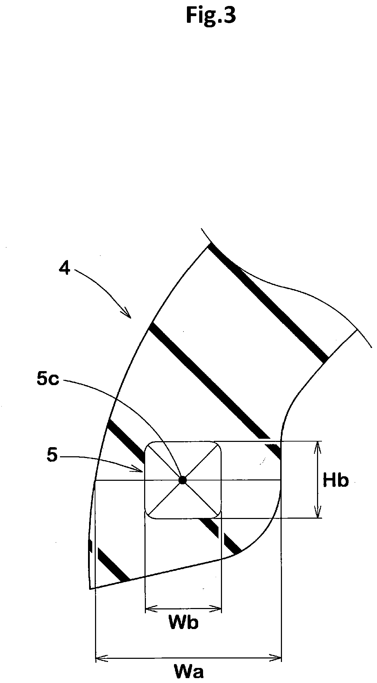

FIG. 3 is an enlarged cross-sectional view of one of the bead portions 4 in FIG. 1. FIG. 3 does not show the carcass 6 or the rim R shown in FIG. 1. As shown in FIG. 3, a cross-sectional width Wb (mm) in the tire axial direction of the corresponding bead core 5 satisfies expression (1) described below in the present invention. The present invention only has to be such that at least one of the two bead cores 5 of the tire 1 satisfies expression (1). In a desirable form, each of the two bead cores 5 satisfies expression (1) in the present embodiment.

$$Wb \leq 21 \times (SH/SW) \cdots (1)$$

In the present invention, the average values of the above respective parameters (the cross-sectional width SW and the cross-sectional height SH of the tire 1 and the cross-sectional width Wb of the bead core 5) are desirably applied to the above expression (1) from the viewpoint of permitting variations in the parameters. Therefore, for example, the average value of cross-sectional widths Wb measured at a plurality of positions different from one another in the tire circumferential direction is used as the cross-sectional width Wb of the bead core 5. The same applies to other parameters (including parameters described below).

A tire having a size specified in the present invention has a low aspect ratio, and thus has a low cross-sectional height. Consequently, such a tire tends to have poor rim-mounting workability. The present inventors found that, in order to improve the rim-mounting workability of this type of tire, it was effective to: decrease the cross-sectional width Wb of the bead core 5 so as to facilitate deformation of the bead portion 4; and identify an upper limit value of the cross-sectional width Wb of the bead core 5 in association with the aspect ratio (SH/SW). In addition, research was conducted from various viewpoints in relation to the relationship between the rim-mounting workability and each of the aspect ratio (SH/SW) of the tire 1 and the cross-sectional width Wb of the bead core. As a result, the above expression (1) was derived. In the tire 1 according to the present invention, the cross-sectional width Wb satisfies the above expression (1), whereby the rim-mounting workability can be enhanced.

Hereinafter, more detailed configurations of the present embodiment will be described. The configurations described below indicate specific modes of the present embodiment. Therefore, it is needless to say that the present invention can achieve the above effects even when the configurations described below are not provided. In addition, even when any one of the configurations described below is independently applied to the tire according to the present invention having the above features, performance improvement based on said configuration can be expected. Furthermore, when some of the configurations described below are applied in combination, complex performance improvement based on said configurations can be expected.

The cross-sectional width Wb (mm) desirably satisfies expression (2) described below. Consequently, the durability of the bead portion 4 can be ensured.

$$Wb \geq 15 \times (SH/SW) \cdots (2)$$

A cross-sectional height Hb (mm) in the tire radial direction of the bead core 5 and the cross-sectional width Wb desirably satisfy expression (3) described below. Consequently, the aspect ratio of the bead core 5 is set to an appropriate value, and the rim-mounting workability and the durability of the bead portion 4 are improved in a balanced manner.

$$0.8 \leq Wb/Hb \leq 1.4 \cdots (3)$$

A width Wa (mm) in the tire axial direction of the bead portion 4 is, for example, not larger than 3.0 times the cross-sectional width Wb of the bead core 5. Consequently, the rigidity of the bead portion 4 is moderated, and the rim-mounting workability is further improved. From this viewpoint, the width Wa is desirably not larger than 2.8 times and more desirably not larger than 2.6 times the cross-sectional width Wb. Also, the width Wa is desirably 18 mm or smaller. The width Wa means a width in the tire axial direction of the bead portion 4 at the position of the bead core 5. More specifically, the width Wa means a width in the tire axial direction of the bead portion 4 on a line passing through a centroid 5c of a cross section of the bead core 5.

In order to ensure the durability of the bead portion 4, the width Wa of the bead portion 4 is, for example, not smaller than 2.0 times, desirably not smaller than 2.2 times, and more desirably not smaller than 2.4 times the cross-sectional width Wb. Also, the width Wa is desirably 12 mm or larger.

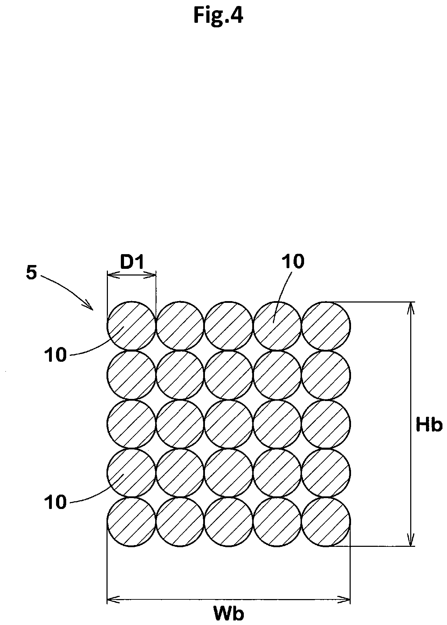

FIG. 4 is an enlarged cross-sectional view showing the bead core 5 in more detail. As shown in FIG. 4, the bead core 5 includes a plurality of bead wires 10 in a transverse cross section thereof. The bead core 5 may be obtained by winding one bead wire 10 in the tire circumferential direction a plurality of times or may be obtained by bundling a plurality of annular bead wires 10. In the cross sections in FIG. 1 and FIG. 3, each of the bead cores 5 is shown in a state where the bead wires 10 shown in FIG. 4 are not shown.

The cross-sectional width Wb of the bead core 5 and a wire diameter D1 (with the unit thereof being "mm") of one of the bead wires 10 desirably satisfy expression (4) described below. Likewise, the cross-sectional height Hb of the bead core 5 and the wire diameter D1 of one of the bead wires desirably satisfy expression (5) described below. Consequently, the rim-mounting workability and the durability of the bead portion 4 are improved in a balanced manner.

$$4 \leq Wb/D1 \leq 7 \cdots (4)$$

$$4 \leq Hb/D1 \leq 7 \cdots (5)$$

Although the pneumatic tire according to the embodiment of the present invention has been described above in detail, the present invention is not limited to the above specific embodiment, and various modifications can be made to implement the present invention.

EXAMPLES

Pneumatic tires each having a basic structure shown in FIG. 1 and each having a rim diameter of 15 inches were produced as samples on the basis of specifications in Table 1.

In addition, tires that did not satisfy the above expression (1) were produced as samples in Comparative Examples. The tires in the Comparative Examples are substantially the same as the tires in the Examples, except for the above feature. The rim-mounting workability of each of the test tires and the durability of each of the bead portions of the test tire were tested. Specifications common to the test tires and methods for the tests are as follows.

Mounting rim: 15×7.0 J
Tire internal pressure: 350 kPa

<Rim-Mounting Workability>

Sensory evaluation by an operator was performed in relation to the workability at the time of mounting the test tire on a rim. Regarding the result of the evaluation, a larger numerical value thereof indicates that the workability for the rim is better.

<Durability of Bead Portion>

The test tire having been mounted on the rim was further filled with air, and an internal pressure at which the bead portion was damaged was measured. Regarding the result, this internal pressure is indicated as an index, and a larger numerical value thereof indicates that the durability of the bead portion is better.

The results of the tests are indicated in Table 1.

[Table 1]

|  | Com. Ex. 1 | Ex. 1 | Ex. 2 | Ex. 3 | Ex. 4 | Ex. 5 | Ex. 6 |
|---|---|---|---|---|---|---|---|
| Cross-sectional height SH of tire (mm) | 61.5 | 61.5 | 82 | 82 | 82 | 82 | 82 |
| Cross-sectional width SW of tire (mm) | 205 | 205 | 205 | 205 | 205 | 205 | 205 |
| Cross-sectional width Wb of bead core (mm) | 7.2 | 6.0 | 7.2 | 6.0 | 6.0 | 6.0 | 6.0 |
| 21×(SH/SW) | 6.30 | 6.30 | 8.40 | 8.40 | 8.40 | 8.40 | 8.40 |
| Whether or not expression (1) is satisfied | Not satisfied | Satisfied | Satisfied | Satisfied | Satisfied | Satisfied | Satisfied |
| Cross-sectional height Hb of bead core (mm) | 7.2 | 6.0 | 7.2 | 6.0 | 3.6 | 6.0 | 6.0 |
| Wb/Hb | 1.0 | 1.0 | 1.0 | 1.0 | 1.7 | 1.0 | 1.0 |
| Width Wa of bead portion (mm) | 15.0 | 15.0 | 15.0 | 15.0 | 15.0 | 19.0 | 15.0 |
| Wa/Wb | 2.08 | 2.50 | 2.08 | 2.50 | 2.50 | 3.17 | 2.50 |
| Wire diameter D1 of bead wire (mm) | 1.2 | 1.2 | 1.2 | 1.2 | 1.2 | 1.2 | 2.0 |
| Wb/D1 | 6.0 | 5.0 | 6.0 | 5.0 | 5.0 | 5.0 | 3.0 |
| Rim-mounting workability (index) | 80 | 100 | 105 | 110 | 115 | 105 | 100 |
| Durability of bead portion (index) | 105 | 100 | 100 | 100 | 90 | 100 | 100 |

[Table 2]

|  | Com. Ex. 2 | Com. Ex. 3 | Com. Ex. 4 | Ex. 7 | Ex. 8 | Ex. 9 | Ex. 10 |
|---|---|---|---|---|---|---|---|
| Cross-sectional height SH of tire (mm) | 61.5 | 82 | 92 | 61.5 | 82 | 92 | 92 |
| Cross-sectional width SW of tire (mm) | 205 | 205 | 205 | 205 | 205 | 205 | 205 |
| Cross-sectional width Wb of bead core (mm) | 8.4 | 9.6 | 9.6 | 4.8 | 8.4 | 8.4 | 7.2 |
| 21×(SH/SW) | 6.30 | 8.40 | 9.42 | 6.30 | 8.40 | 9.42 | 9.42 |
| Whether or not expression (1) is satisfied | Not satisfied | Not satisfied | Not satisfied | Satisfied | Satisfied | Satisfied | Satisfied |
| Cross-sectional height Hb of bead core (mm) | 7.2 | 7.2 | 7.2 | 6.0 | 7.2 | 7.2 | 7.2 |
| Wb/Hb | 1.2 | 1.3 | 1.3 | 0.8 | 1.2 | 1.2 | 1.0 |
| Width Wa of bead portion (mm) | 15.0 | 15.0 | 15.0 | 15.0 | 15.0 | 15.0 | 15.0 |
| Wa/Wb | 1.79 | 1.56 | 1.56 | 3.13 | 1.79 | 1.79 | 2.08 |

(continued)

| | Com. Ex. 2 | Com. Ex. 3 | Com. Ex. 4 | Ex. 7 | Ex. 8 | Ex. 9 | Ex. 10 |
|---|---|---|---|---|---|---|---|
| Wire diameter D1 of bead wire (mm) | 1.2 | 1.2 | 1.2 | 1.2 | 1.2 | 1.2 | 1.2 |
| Wb/D1 | 7.0 | 8.0 | 8.0 | 4.0 | 7.0 | 7.0 | 6.0 |
| Rim-mounting workability (index) | 70 | 70 | 75 | 115 | 100 | 110 | 115 |
| Durability of bead portion (index) | 110 | 110 | 105 | 95 | 105 | 100 | 95 |

Regarding each of the above evaluation items (the rim-mounting workability and the durability of the bead portion), a tire scoring 80 or more points for the evaluation item is regarded as satisfying requirements in the market (hereinafter, expressed as "having marketability"). As indicated in Tables 1 and 2, the rim-mounting workability in Comparative Example 1 is 80 points, and the rim-mounting workability in each of Comparative Examples 2 to 4 is 70 to 75 points. That is, each of Comparative Examples 1 to 4 is at such a level that enhancement of the rim-mounting workability is desired. Meanwhile, the rim-mounting workability in each of Examples 1 to 10 can be understood to have been significantly enhanced to 100 to 115 points. That is, it has been confirmed that the tire according to the present invention has excellent rim-mounting workability. In addition, the tire in each of Examples 1 to 10 has marketability since even the lowest one of the durabilities of the bead portions in Examples 1 to 10 is 90 points. That is, it has been confirmed that the tire according to the present invention can also maintain the durability of the bead portion.

[Additional Notes]

The present invention includes the following aspects.

[Present Invention 1]

A pneumatic tire to be mounted on a rim and used,

the rim having a rim diameter RD of 10 to 18 inches,
a ratio SH/SW of a cross-sectional height SH of the tire to a cross-sectional width SW of the tire being 0.30 to 0.45,
a ratio RW/SW of a rim width RW of the rim to the cross-sectional width SW of the tire being 0.78 to 0.99,
the pneumatic tire comprising a pair of bead portions in which respective bead cores are embedded, wherein
a cross-sectional width Wb (mm) in a tire axial direction of at least one of the bead cores satisfies expression (1) described below,

$$\mathrm{Wb} \leq 21 \times (\mathrm{SH/SW}) \cdots (1).$$

[Present Invention 2]

The pneumatic tire according to present invention 1, wherein the cross-sectional width Wb (mm) satisfies expression (2) described below,

$$\mathrm{Wb} \geq 15 \times (\mathrm{SH/SW}) \cdots (2).$$

[Present Invention 3]

The pneumatic tire according to present invention 1 or 2, wherein a cross-sectional height Hb (mm) in a tire radial direction of the at least one of the bead cores and the cross-sectional width Wb (mm) satisfy expression (3) described below,

$$0.8 \leq \mathrm{Wb/Hb} \leq 1.4 \cdots (3).$$

[Present Invention 4]

The pneumatic tire according to any one of present inventions 1 to 3, wherein, at a position of the at least one of the bead cores, a width Wa (mm) in the tire axial direction of the corresponding bead portion is not larger than 3.0 times the cross-sectional width Wb (mm).

[Present Invention 5]

The pneumatic tire according to present invention 4, wherein the width Wa (mm) is not smaller than 2.0 times the cross-sectional width Wb (mm).

[Present Invention 6]

The pneumatic tire according to present invention 4 or 5, wherein the width Wa (mm) is 18 mm or smaller.

[Present Invention 7]

The pneumatic tire according to any one of present inventions 1 to 6, wherein

each of the bead cores includes a plurality of bead wires in a transverse cross section thereof, and
the width Wb (mm) and a wire diameter D1 (mm) of one of the bead wires satisfy expression (4) described below,

$$4 \leq Wb/D1 \leq 7 \cdots (4).$$

**Claims**

1. A pneumatic tire (1) to be mounted on a rim (R) and used,

the rim (R) having a rim diameter RD of 10 to 18 inches,
a ratio SH/SW of a cross-sectional height SH of the tire (1) to a cross-sectional width SW of the tire (1) being 0.30 to 0.45,
a ratio RW/SW of a rim width RW of the rim (R) to the cross-sectional width SW of the tire (1) being 0.78 to 0.99,
the pneumatic tire (1) comprising a pair of bead portions (4) in which respective bead cores (5) are embedded, wherein
a cross-sectional width Wb (mm) in a tire axial direction of at least one of the bead cores (5) satisfies expression (1) described below,

$$Wb \leq 21 \times (SH/SW) \cdots (1).$$

2. The pneumatic tire (1) according to claim 1, wherein the cross-sectional width Wb (mm) satisfies expression (2) described below,

$$Wb \geq 15 \times (SH/SW) \cdots (2).$$

3. The pneumatic tire (1) according to claim 1 or 2, wherein a cross-sectional height Hb (mm) in a tire radial direction of the at least one of the bead cores (5) and the cross-sectional width Wb (mm) satisfy expression (3) described below,

$$0.8 \leq Wb/Hb \leq 1.4 \cdots (3).$$

4. The pneumatic tire (1) according to any one of claims 1 to 3, wherein, at a position of the at least one of the bead cores (5), a width Wa (mm) in the tire axial direction of the corresponding bead portion (4) is not larger than 3.0 times the cross-sectional width Wb (mm).

5. The pneumatic tire (1) according to claim 4, wherein the width Wa (mm) is not smaller than 2.0 times the cross-sectional width Wb (mm).

6. The pneumatic tire (1) according to claim 4 or 5, wherein the width Wa (mm) is 18 mm or smaller.

7. The pneumatic tire (1) according to any one of claims 1 to 6, wherein

each of the bead cores (5) includes a plurality of bead wires (10) in a transverse cross section thereof, and the width Wb (mm) and a wire diameter D1 (mm) of one of the bead wires (10) satisfy expression (4) described below,

$$4 \leq Wb/D1 \leq 7 \cdots (4).$$

## Fig.1

# Fig.2

# Fig.3

**Fig.4**

EP 4 592 092 A1

Europäisches
Patentamt
European
Patent Office
Office européen
des brevets

**EUROPEAN SEARCH REPORT**

Application Number

EP 25 15 1038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2005 053252 A (SUMITOMO RUBBER IND) 3 March 2005 (2005-03-03) | 1-6 | INV. B60C3/04 B60C15/04 B60C15/06 |
| Y | * paragraph [0030]; figure 3b; table 1 * | 7 | |
| X | JP 2009 262865 A (YOKOHAMA RUBBER CO LTD) 12 November 2009 (2009-11-12) | 1-6 | |
| Y | * paragraph [0026]; figures 1-3 * | 7 | |
| X | US 2023/219377 A1 (SAEKI TETSURO [JP]) 13 July 2023 (2023-07-13) | 1-6 | |
| Y | * figures 1,3; examples 3-7; table 1 * | 7 | |
| Y | EP 4 043 236 A1 (BRIDGESTONE CORP [JP]) 17 August 2022 (2022-08-17) * paragraph [0067]; figures 5,6 * | 7 | |

TECHNICAL FIELDS
SEARCHED        (IPC)

B60C

The present search report has been drawn up for all claims

| Place of search | Date of completion of the search | Examiner |
|---|---|---|
| Munich | 10 June 2025 | Brito, Fernando |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 1038

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2025

| Patent document cited in search report | Publication date | Patent family member(s) | | Publication date |
|---|---|---|---|---|
| JP 2005053252 A | 03-03-2005 | NONE | | |
| JP 2009262865 A | 12-11-2009 | NONE | | |
| US 2023219377 A1 | 13-07-2023 | EP | 4212355 A1 | 19-07-2023 |
| | | JP | 2023102627 A | 25-07-2023 |
| | | US | 2023219377 A1 | 13-07-2023 |
| EP 4043236 A1 | 17-08-2022 | CN | 114466753 A | 10-05-2022 |
| | | EP | 4043236 A1 | 17-08-2022 |
| | | JP | 7353902 B2 | 02-10-2023 |
| | | JP | 2021059195 A | 15-04-2021 |
| | | US | 2022339964 A1 | 27-10-2022 |
| | | WO | 2021065511 A1 | 08-04-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021075088 A

- JP 2023102627 A